# EUROPÄISCHE PATENTSCHRIFT

(11) **EP 4 598 331 B1**
(45) Veröffentlichungstag und Bekanntmachung des Hinweises auf die Patenterteilung: **22.07.2026**
(21) Anmeldenummer: 23782870.2
(22) Anmeldetag: 28.09.2023
(51) Int. Cl.: A01C 7/20, A01B 63/32, A01B 73/04

(54) **SCHARBOCK FÜR LANDWIRTSCHAFTLICHE MASCHINEN**
SHARE HOLDER FOR AGRICULTURAL MACHINES
SUPPORT DE SOC POUR MACHINES AGRICOLES

(30) Priorität: 06.10.2022 DE 102022125740
(43) Veröffentlichungstag der Anmeldung: 13.08.2025
(73) Patentinhaber: Amazonen-Werke H. Dreyer SE & Co. KG, 49205 Hasbergen (DE)
(72) Erfinder: KOCH, Jens, 29525 Uelzen (DE); LUEBBEN, Jan-Eike, 26188 Edewecht (DE); BARTH, Sören, 27619 Schiffdorf (DE)
(74) Vertreter: Grünecker Patent- und Rechtsanwälte PartG mbB
(86) Internationale Anmeldenummer: PCT/EP2023/076824
(87) Internationale Veröffentlichungsnummer: WO 2024/074385

(56) Entgegenhaltungen:
- WO-A1-2023/174490
- DE-A1- 19 908 241
- US-A1- 2005 120 929
- US-B2- 11 166 402

## Beschreibung

Die Erfindung betrifft einen Scharbock mit einer Rahmenanbindung zur Befestigung an einem Maschinenrahmen und einer Scharanbindung zur Befestigung einer Schareinheit, wobei die Scharanbindung über ein Stellelement zwischen einer Arbeitsstellung und einer Aushubstellung relativ zu der Rahmenanbindung um eine Schwenkachse verschwenkbar und über eine Verriegelung zur Fixierung der Schareinheit in der Arbeitsstellung gegenüber der Rahmenanbindung verriegelbar ist. Ein weiterer Gegenstand der Erfindung ist eine Sämaschine mit einem solchen Scharbock.

Solche Scharböcke kommen bei landwirtschaftlichen Maschinen, insbesondere Bodenbearbeitungsmaschinen oder Sämaschinen, zum Einsatz und dienen der Befestigung einzelner Schareinheiten an einem gemeinsamen Maschinenrahmen. **In** der Regel sind mehrere Schareinheiten, welche oftmals scharartige Werkzeuge zum Aufreißen oder Lockern des Bodens einer landwirtschaftlichen Nutzfläche aufweisen, quer zu einer Fahrtrichtung nebeneinander an dem hinteren Ende der landwirtschaftlichen Maschine angeordnet und über jeweils einen Scharbock mit dem Maschinenrahmen verbunden.

**In** einer einfachen Ausführung ist ein solcher Scharbock dabei nach Art einer mehrfach abgekanteten Befestigungsplatte ausgebildet und weist auf dessen einer Seite eine Rahmenanbindung zur Befestigung an dem Maschinenrahmen und auf dessen anderer Seite eine Scharanbindung zur Befestigung der Schareinheit auf. Die Befestigung des Scharbocks an dem Maschinenrahmen und/oder der Schareinheit erfolgt in der Regel über lösbare Befestigungselemente wie Schrauben oder Bolzen.

Eine solche, in der Regel zahlreiche Schareinheiten aufweisende Maschine wird üblicherweise zur Bodenbearbeitung oder zur Aussaat mit einer gewissen Fahrgeschwindigkeit in Fahrtrichtung entlang im Wesentlichen parallel zueinander verlaufenden Bahnen über die landwirtschaftliche Nutzfläche bewegt, wozu diese beispielsweise an landwirtschaftliche Zugmaschinen angehängt oder angebaut sein kann. Die Schareinheiten laufen der landwirtschaftlichen Zugmaschine nach, wobei die Laufrichtung der Fahrtrichtung der Zugmaschine entspricht. Hierbei sind mittels der scharartigen Werkzeuge der Schareinheiten parallele rinnen- oder rillenartige Furchen in dem Boden erzeugbar, in welche etwa Saatgut zur Aussaat abgelegt oder Dünger ausgebracht werden kann. Die Anzahl der nebeneinander angeordneten Schareinheiten der Maschine bestimmt dabei die Anzahl der zu erzeugenden Furchen.

In der landwirtschaftlichen Praxis hat es sich als nachteilig herausgestellt, dass insbesondere bei in geringem Abstand nebeneinander angeordneten Schareinheiten die Furchenbildung einer Schareinheit von den beiden benachbarten Schareinheiten beeinflusst wird. Der von einer Schareinheit erzeugte Bodenaushub wird in der Regel zu beiden Seiten quer zur Laufrichtung abgeleitet, wobei dieser mit dem Bodenaushub der benachbarten Schareinheiten kollidieren kann und es zu Stauungen zwischen den Schareinheiten kommen kann.

Aus diesem Grund hat es sich als vorteilhaft erwiesen, wenn benachbarte Schareinheiten in Laufrichtung versetzt zueinander angeordnet sind. Hierfür kommen in der Praxis verlängerte Scharböcke zum Einsatz, bei welchen der Abstand zwischen der Rahmenanbindung und der Scharanbindung in Laufrichtung vergrößert ist. Bei einer abwechselnden Anordnung von kurzen, plattenartigen und verlängerten Scharböcken ergibt sich somit eine abwechselnd versetzte Anordnung der Schareinheiten auf zwei Linien, wodurch der Bodenaushub der Schareinheiten ungehindert zu beiden Seiten ableitbar ist und ein auch ein verbesserter Durchgang von Erde und organischem Material zwischen den Schareinheiten ermöglicht wird.

Darüber hinaus hat es sich in der landwirtschaftlichen Praxis als vorteilhaft erwiesen, wenn einzelne Schareinheiten deaktivierbar sind, beispielsweise zur Vermeidung einer wiederholten Bodenbearbeitung bei sich überlappenden Bahnen oder zur Realisierung unterschiedlicher Furchenabstände. Aus der US 11,166,402 B2 sind verlängerte Scharböcke bekannt, welche eine zusätzliche Schwenkfunktionalität zum Verschwenken der Schareinheit aufweisen. Bei diesen Scharböcken ist die Scharanbindung relativ zu der Rahmenanbindung über ein hydraulisches Stellelement zwischen einer Arbeitsstellung und einer Aushubstellung um eine Schwenkachse verschwenkbar. In deren Aushubstellung ist bei solchen Scharböcken die jeweilige Schareinheit gegenüber der Nutzfläche angehoben und somit deaktiviert; in deren abgesenkten Arbeitsstellung ist die Schareinheit aktiviert und bereit zur Bodenbearbeitung. Es sind somit verschiedene Konfigurationen der Maschinen einstellbar, welche sich durch eine unterschiedliche Abfolge angehobener und abgesenkter Schareinheiten auszeichnen.

Abhängig von verschiedenen Einflussfaktoren, wie bspw. der Bodenbeschaffenheit oder der Fahrgeschwindigkeit, wirken in der Arbeitsstellung große Kräfte auf die Schareinheiten. Diese Kräfte können bei solchen Scharböcken mit Schwenkfunktion zu einem ungewollten Verschwenken der Scharanbindung führen. Hierdurch kann es zu einer Veränderung der Furchentiefe und im schlimmsten Fall sogar zu einem Abheben der Schareinheit von der Nutzfläche kommen, was die Qualität der Bodenbearbeitung oder der Saatausbringung deutlich beeinträchtigen kann. Um dieses Problem zu verhindern, weisen die in der US 11,166,402 B2 beschriebenen Scharböcke eine Verriegelung auf. Über diese Verriegelung ist die Scharanbindung in der Arbeitsstellung relativ zur Rahmenanbindung verriegelbar, wodurch eine Fixierung der Scharanbindung relativ zur Rahmenanbindung erreicht werden kann. Die Verriegelung ist dabei nach Art eines federbelasteten Verriegelungshakens ausgebildet, welcher zur Entriegelung manuell betätigt werden muss.

In der Praxis haben sich solche verlängerte und schwenkbare Scharböcke grundsätzlich bewährt. Allerdings hat es sich im Einsatz auf dem Feld als nachteilig erwiesen, dass das Bedienpersonal, d. h. in der Regel der Fahrer der Zugmaschine, die Verriegelung zunächst manuell entriegeln muss, bevor die Scharanbindung über das Stellelement relativ zu der Rahmenanbindung verschwenkt werden kann. Insbesondere bei einer größeren Anzahl zu verschwenkender Scharanbindungen oder einer häufigen Veränderung der Konfiguration der Maschine resultiert dies in einem zeitintensiven, erhöhten Bedienaufwand.

Die vorliegende Erfindung stellt sich vor diesem Hintergrund die **Aufgabe**, einen Scharbock anzugeben, bei welchem die Verriegelung auf bedienerfreundliche Art und Weise betätigbar ist.

Diese Aufgabe wird bei einem Scharbock der eingangs genannten Art durch die Merkmale des Patentanspruchs 1 **gelöst**. Vorteilhafte Weiterbildungen sind in den abhängigen Unteransprüchen angegeben.

Die Verriegelung ist mit dem Stellelement wirkverbunden und durch Betätigung des Stellelements betätigbar. Hierdurch kann eine bedienerfreundliche und zeitsparende Betätigung der Verriegelung über das Stellelement ermöglicht werden. Dem Stellelement kommt insoweit eine Doppelfunktion zu. Denn es dient nicht nur zum Verschwenken der Scharanbindung relativ zu der Rahmenanbindung, sondern auch zur Verriegelung der Scharanbindung relativ zu der Rahmenanbindung in der Arbeitsstellung der Schareinheit.

In einer vorteilhaften Weiterbildung der Erfindung wird vorgeschlagen, dass sich das Stellelement zwischen einem an der Rahmenanbindung ausgebildeten Drehlager und einem an der Scharanbindung ausgebildeten Drehlager erstreckt. Eine derartige Anordnung ermöglicht eine definierte und zuverlässige Lagerung des Stellelements. Ferner wird durch eine derartige Anordnung ermöglicht, dass die Scharanbindung durch eine Längenänderung des Stellelements auf einfache Art und Weise relativ zu der Rahmenanbindung um die Schwenkachse verschwenkbar ist.

Es ist von konstruktivem Vorteil, wenn das an der Rahmenanbindung angeordnete Drehlager in einer Lagerführung bewegbar, insbesondere quer zur Schwenkachse bewegbar, insbesondere zwischen einem oberen Anschlag und einem unteren Anschlag der Lagerführung bewegbar, gelagert ist. Eine derartige Ausgestaltung ermöglicht dem an der Rahmenanbindung angeordneten Drehlager auf vorteilhafte Art und Weise einen zusätzlichen Freiheitsgrad in Form einer Bewegbarkeit entlang der Lagerführung. Die zusätzliche Bewegbarkeit des Drehlagers kann zum Ver- und Entriegeln der Scharanbindung genutzt werden. Über den oberen Anschlag und den unteren Anschlag der Lagerführung kann eine einfache Begrenzung der Bewegbarkeit des an der Rahmenanbindung angeordneten Drehlagers erreicht werden. Die Anschläge können in vorteilhafter Weise mit verschiedenen Stellungen der Verriegelung korrespondieren. Insbesondere kann der obere Anschlag mit der Verriegelungsstellung der Verriegelung und/oder der untere Anschlag mit einer Entriegelungsstellung der Verriegelung korrespondieren.

Des Weiteren hat es sich als vorteilhaft erwiesen, wenn die Verriegelung mindestens einen um eine Verriegelungsachse verschwenkbaren Verriegelungshebel aufweist. Ein derartiger Verriegelungshebel kann auf kinematisch einfache Art und Weise zum Ver- und Entriegeln um die Verriegelungsachse verschwenkt werden. Ferner erlaubt ein um eine Verriegelungsachse schwenkbarer Verriegelungshebel auf vorteilhaft einfache Art und Weise eine einseitige Betätigung über das Stellelement.

In diesem Zusammenhang wird ferner vorgeschlagen, dass der Verriegelungshebel auf der einen Seite der Verriegelungsachse über ein Hebellager mit dem an der Rahmenanbindung angeordneten Drehlager verbunden ist und auf der anderen Seite der Verriegelungsachse ein Verriegelungselement aufweist. Eine derartige Ausgestaltung ermöglicht definierte Wippbewegungen des Verriegelungshebels um die Verriegelungsachse. Insbesondere können die Wippbewegungen durch die Anschläge der rahmenanbindungsseitigen Lagerführung begrenzt sein. Die Wippbewegungen um die Verriegelungsachse können eine sichere Betätigung der Verriegelung bei vorteilhaft geringem Platzbedarf ermöglichen. Ferner können die über das Stellelement aufzubringenden Betätigungskräfte aufgrund vorteilhafter Hebelverhältnisse gering sein.

In diesem Zusammenhang hat es sich als konstruktiv vorteilhaft erwiesen, wenn das Hebellager und das Verriegelungselement oberhalb der Verriegelungsachse angeordnet sind. Die aus einer solchen Anordnung resultierenden Hebelverhältnisse ermöglichen eine besonders einfache und kraftsparende Durchführung von Wippbewegungen.

Darüber hinaus wird vorgeschlagen, dass über das Stellelement eine auf das Verriegelungselement wirkende Verriegelungskraft aufbringbar ist. Die über das Stellelement auf das Verriegelungselement wirkende Verriegelungskraft ermöglicht eine zuverlässige Verriegelung der Schareinheit gegenüber der Rahmenanbindung. Hierdurch kann auch bei erhöhten Fahrgeschwindigkeiten eine zuverlässige Übertragung eines definierten Schardrucks auf die Schareinheiten ermöglicht werden, wodurch eine gleichbleibende Furchentiefe und somit eine gleichbleibende Qualität der Saatgutausbringung sichergestellt werden kann. Außerdem kann über eine derartige Verriegelungskraft ein ungewolltes Entriegeln, beispielsweise aufgrund von Vibrationen oder einem Aufschaukeln in der Arbeitsstellung, verhindert werden, wodurch ebenfalls eine kontinuierliche Qualität der Bodenbearbeitung sichergestellt werden kann.

Eine vorteilhafte Ausgestaltung des Verriegelungselements sieht vor, dass dieses hakenförmig ausgebildet ist und an einem an der Scharanbindung angeordneten Verriegelungsbolzen verriegelbar ist. Ein derartiges hakenförmiges Verriegelungselement ermöglicht eine besonders zuverlässige Verriegelung, wobei der Verriegelungsbolzen zur gleichmäßigen Übertragung der Verriegelungskraft, insbesondere über einen weiten Umfangsbereich von dem hakenförmigen Verriegelungselement, formschlüssig umschlossen sein kann. Ferner erlaubt ein derartiges hakenförmiges Verriegelungselement eine Kraftübertragung in mehreren Richtungen und damit eine erhöhte Sicherheit gegenüber Rüttel- oder Vibrationseinflüssen. Wenn die Ausnehmung des hakenförmigen Verriegelungselements und der Verriegelungsbolzen korrespondierend ausgestaltet sind, kann eine weitgehend spielfreie Verriegelung erreicht werden.

Eine weitere vorteilhafte Ausgestaltung sieht vor, dass sich der Verriegelungsbolzen in der Arbeitsstellung zur Aufnahme von über die Schareinheit aufgebrachten Kräften an einem an der Rahmenanbindung ausgebildeten Anschlag eines Stützlagers abstützt. Ein derartiger Anschlag des Stützlagers ermöglicht eine gezielte Einstellung der Arbeitsstellung der Schareinheit gegenüber der Rahmenanbindung. Hierdurch kann sichergestellt werden, dass die Scharanbindung und damit die Schareinheit wiederholgenau stets in der gleichen Position gegenüber der Rahmenanbindung fixierbar sind. Ferner kann ein derartiger Anschlag zur Vermeidung von erhöhtem Spiel und damit einhergehendem Verschleiß dienen.

In diesem Zusammenhang wird vorgeschlagen, dass das Stützlager einen trichterförmigen Führungsbereich zur Einführung des Verriegelungsbolzens aufweist. Ein derartiger trichterförmiger Führungsbereich erlaubt die zuverlässige Einführung des Verriegelungsbolzens. Ferner können über einen derartigen trichterförmigen Führungsbereich selbst bei unerwünschte Verkippungen der Schareinheiten vermieden werden, welche insbesondere unter einseitiger Last, beispielsweise an Hanglagen, auftreten können.

Es wird weiter vorgeschlagen, dass sich der Verriegelungsbolzen quer zu einer Laufrichtung der Schareinheit erstreckt sowie einen mit dem Verriegelungselement zusammenwirkenden Verriegelungsbereich und einem mit dem Stützlager zusammenwirkenden Stützbereich aufweist. Bei einer derartigen Ausgestaltung kommt dem Verriegelungsbolzen eine Doppelfunktion zu, wodurch eine Konstruktion mit vorteilhaft geringer Teilezahl möglich ist.

Darüber hinaus wird vorgeschlagen, dass sich die Verriegelungsachse und die Schwenkachse im Wesentlichen quer zur Laufrichtung der Schareinheit parallel zueinander erstrecken. Über eine derartige Ausgestaltung können Verkantungen und/oder Verkippungen beim Ver- und Entriegeln auf vorteilhaft einfache Art und Weise vermieden werden, wodurch sich eine verschleißarme Konstruktion mit geringem Ausfallrisiko ergibt. Alternativ können sich die Verriegelungsachse und die Schwenkachse auch in einem Winkel zur Laufrichtung der Schareinheit erstrecken. Ferner sind auch Anordnungen der Verriegelungsachse und der Schwenkachse denkbar, bei welchen sich diese nicht parallel zueinander erstrecken.

Des Weiteren hat es sich als vorteilhaft herausgestellt, wenn die Schwenkachse oberhalb der Verriegelungsachse angeordnet ist. Hierdurch kann ein günstiger Kraftfluss zur sicheren Fixierung der Scharanbindung gegenüber der Rahmenanbindung in der Arbeitsstellung ermöglicht werden. Außerdem ermöglicht eine derartige Anordnung eine verbesserte Zugänglichkeit der Verriegelung. Es sind jedoch auch Konstruktionen denkbar, bei welchen die Schwenkachse auf gleicher Höhe oder unterhalb der Verriegelungsachse angeordnet sein kann.

In einer vorteilhaften Weiterbildung der Erfindung wird eine sich entlang der Verriegelungsachse erstreckende Verriegelungswelle vorgeschlagen, welche über eine Verdrehsicherung verdrehsicher an der Rahmenanbindung gelagert ist. Eine solche Verriegelungswelle ermöglicht definierte Schwenkbewegungen des Verriegelungselements um die Verriegelungsachse. Über die Verdrehsicherung kann eine möglichst spiel- und verschleißarme Konstruktion erreicht werden.

In Bezug auf den Verriegelungshebel wird vorgeschlagen, dass dieser als Doppelhebel ausgebildet ist. Ein derartiger Doppelhebel ermöglicht eine besonders ausfallsichere sowie kippsichere Verriegelung über zwei Stützstellen. Ferner und hat sich ein Doppelhebel als vorteilhaft im Hinblick auf eine symmetrische Aufbringung der Verbindungskraft herausgestellt.

Es hat sich ferner als vorteilhaft erwiesen, wenn die Rahmenanbindung und die Scharanbindung jeweils einen Montagebereich zur lösbaren Montage an dem Maschinenrahmen und/oder der Schareinheit aufweisen. Über einen solchen Montagebereich kann eine montagefehlerunanfällige und bedienerfreundliche Montage der Rahmenanbindung und der Scharanbindung an dem Maschinenrahmen und/oder der Schareinheit ermöglicht werden. Ferner kann über eine derartige Ausgestaltung ein einfacher und schneller Austausch der Rahmenanbindung und/oder der Scharanbindung ermöglicht werden.

Als konstruktiv vorteilhaft hat sich eine Ausgestaltung erwiesen, bei der die Schwenkachse an einem dem Montagebereich gegenüberliegenden Ende der Scharanbindung angeordnet ist und das Drehlager zwischen der Schwenkachse und dem Montagebereich angeordnet ist. Eine derartige Ausgestaltung ermöglicht ein kinematisch vorteilhaftes Verschwenken der Scharanbindung um die Schwenkachse über einen vorteilhaft großen Schwenkwinkelbereich.

**In** diesem Zusammenhang wird ferner vorgeschlagen, dass ein Abstand zwischen dem Drehlager und der Schwenkachse kleiner ist als ein Abstand zwischen dem Drehlager und dem Montagebereich. Die hieraus resultierenden Hebelverhältnisse ermöglichen einen großen Schwenkwinkelbereich bei vorteilhaft geringem Kraftaufwand für die Schwenkbewegungen.

Es hat sich darüber hinaus als vorteilhaft erwiesen, wenn der Montagebereich der Rahmenanbindung komplementär zu einem Montagebereich des Maschinenrahmens und der Montagebereich der Scharanbindung komplementär zu einem Montagebereich der Schareinheit ausgebildet sind. Eine derartige Ausgestaltung ermöglicht einen besonders einfachen und bedienerfreundlichen Austausch des Scharbocks. Durch die komplementäre Ausgestaltung der Montagebereiche lässt sich die Konfiguration der landwirtschaftlichen Maschine bedienerfreundlich und zeitsparend anpassen. Insbesondere können somit Schareinheiten somit wahlweise direkt an dem Maschinenrahmen montiert sein oder über den Scharbock mit dem Maschinenrahmen verbunden sein. Darüber hinaus erlaubt eine derartige Ausgestaltung eine einfache Verwendung des Scharbocks als Austausch-/Nachrüstbauteil für bestehende landwirtschaftliche Maschinen, ohne dass aufwendige Veränderungen an den Maschinenrahmen der Maschinen erforderlich sind.

Es hat sich ferner als vorteilhaft erwiesen, wenn die Montagebereiche in der Arbeitsstellung im Wesentlichen parallel zueinander ausgerichtet sind. Dies ermöglicht eine besonders einfache und montagefreundliche Befestigung des Scharbocks sowie eine gute Zugänglichkeit der Montagebereiche. Als besonders vorteilhaft hat sich in diesem Zusammenhang eine vertikale Ausrichtung der Montagebereiche erwiesen. Alternativ können die Montagebereiche jedoch auch winklig zueinander ausgerichtet sein, wenn sich dies im jeweiligen Einsatzbereich als vorteilhaft erweisen sollte.

**In** einer vorteilhaften Weiterbildung der Erfindung wird vorgeschlagen, dass das Stellelement als Hydraulikzylinder ausgebildet ist. Eine derartige Ausgestaltung des Stellelements ermöglicht ein schnelles und exakt einstellbares, insbesondere auch stufenloses, Verschwenken der Scharanbindung gegenüber der Rahmenanbindung. Ferner lassen sich über ein als Hydraulikzylinder ausgebildetes Stellelement vorteilhaft große Stellkräfte zum Verschwenken übertragen. Alternativ kann das Stellelement jedoch auch als mechanisches oder elektrisches Stellelement ausgebildet sein.

Es hat sich als vorteilhaft herausgestellt, wenn sich das Stellelement um einen Winkel abgewinkelt gegenüber dem Montagebereich der Rahmenanbindung erstreckt. Eine derartige winklige Anordnung hat sich als vorteilhaft im Hinblick auf ein möglichst kraftarmes Verschwenken der Scharanbindung gegenüber der Rahmenanbindung über einen möglichst großen Schwenkwinkelbereich erwiesen. Besonders vorteilhaft ist es, wenn das Stellelement in einem Winkel von kleiner 45 Grad, insbesondere kleiner 30 Grad, zu dem Montagebereich der Rahmenanbindung angeordnet ist.

Ferner wird vorgeschlagen, dass eine in der Arbeitsstellung auf das scharanbindungsseitige Ende des Stellelements wirkende Gewichtskraft größer ist als eine auf das rahmenanbindungsseitige Ende des Stellelements wirkende Hebelkraft. Eine derartige Anordnung ermöglicht es, dass bei einer Betätigung des Stellelements in der Arbeitsstellung zunächst die Verriegelung entriegelt wird, bevor die Scharanbindung gegenüber der Rahmenanbindung verschwenkt wird. Besonders vorteilhaft ist es, wenn die auf das scharanbindungsseitige Ende des Stellelements wirkende Gewichtskraft aus dem Eigengewicht der Schareinheit resultiert. Eine derartige, auf dem Eigengewicht der Schareinheit beruhende Verriegelung hat sich als besonders zuverlässig und verschleißarm erwiesen. Ferner können Bedienfehler und daraus resultierende Schäden an der Verriegelung vermieden werden, da automatisch stets zunächst die Verriegelung betätigt wird, bevor die Scharanbindung gegenüber der Rahmenanbindung verschwenkt wird.

Zur L ö s u n g der vorstehenden Aufgabe wird ferner eine Sämaschine gemäß Patentanspruch 13 vorgeschlagen. Im Zusammenhang mit der Sämaschine ergeben sich die gleichen zuvor in Bezug auf den Scharbock genannten Vorteile. Insbesondere können bei einer solchen Sämaschine die Verriegelungen der jeweiligen Schareinheiten auf bedienerfreundliche und zeitsparende Art und Weise über das jeweilige Stellelement betätigt werden.

Im Zusammenhang mit Sämaschine wird vorgeschlagen, dass die Schareinheiten ein Parallelogrammgestänge zur Schardruckeinstellung aufweisen, dessen Ausrichtung sich zwischen der Arbeitsstellung und der Aushubstellung nicht ändert. Eine derartige Anordnung hat sich als besonders bedienerfreundlich im Hinblick auf eine genaue Schardruckeinstellung herausgestellt. Über ein solches Parallelogrammgestänge können gleichmäßige Schardrücke zwischen den Schareinheiten und der Nutzfläche eingestellt werden, wodurch die Gleichmäßigkeit der Bodenbearbeitung und insbesondere die Qualität der Aussaat verbessert werden kann.

Ferner wird im Zusammenhang mit der Sämaschine ein Schardruckzylinder zur Einstellung des Schardrucks durch Änderung der Ausrichtung des Parallelogrammgestänges vorgeschlagen. Ein derartiger Schardruckzylinder ermöglicht auf bedienerfreundliche Art und Weise eine exakte und wiederholgenaue Einstellung des Schardrucks. Über unterschiedliche Schardrücke kann die Sämaschine an verschiedenste Umwelteinflüsse, wie beispielsweise Boden- und Witterungsverhältnisse, oder Saatgutsorten angepasst werden. Ferner kann über den Schardruckzylinder auch eine zusätzliche Möglichkeit des Aushubs der jeweiligen Schareinheit gegeben sein. Besonders vorteilhaft ist es, wenn der Schardruckzylinder als Hydraulikzylinder ausgebildet ist.

Darüber hinaus wird vorgeschlagen, dass die Sämaschine mehrere, quer zur Laufrichtung parallel zueinander angeordnete Schareinheiten aufweist, welche abwechselnd direkt an dem Maschinenrahmen oder indirekt über einen Scharbock an dem Maschinenrahmen befestigt sind. Bei einer solchen Ausgestaltung der Sämaschine ist ein verbesserter Durchgang von Bodenaushub und/oder organischem Material zwischen den Schareinheiten möglich, da diese auf zwei unterschiedlichen Linien quer zur Laufrichtung an dem Maschinenrahmen angeordnet sind. Die jeweils benachbarten Schareinheiten beeinflussen sich bei einer derartigen Anordnung nicht gegenseitig. Alternativ können auch mehrere benachbarte Schareinheiten direkt an der Maschine angeordnet sein oder über einen Scharbock an dem Maschinenrahmen befestigt sein, falls sich dies für die jeweilige Anwendungssituation als vorteilhaft erweisen sollte. Anstelle einer direkten Anordnung können die Scharböcke auch über einen kurzen, plattenartigen Scharbock an dem Maschinenrahmen befestigt sein.

Weitere Einzelheiten und Vorteile der Erfindung werden nachfolgend unter Zuhilfenahme der beigefügten Zeichnungen gemäß Fig. 1 bis 9b erläutert. Darin zeigen:
- Fig. 1: Eine perspektivische Ansicht einer an einer landwirtschaftlichen Zugmaschine angehängten Sämaschine mit mehreren, in zwei Linien an einem Maschinenrahmen befestigten Schareinheiten;
- Fig. 2a und b: Seitenansichten einer an einem Scharbock des Stands der Technik ohne Schwenkfunktion befestigten Schareinheit in einer Arbeits- sowie einer Aushubstellung;
- Fig. 3a und b: Seitenansichten eines erfindungsgemäßen Scharbocks mit Schwenkfunktion einschließlich einer daran befestigter Schareinheit in einer Arbeitsstellung sowie einer Aushubstellung;
- Fig. 4: eine perspektivische Ansicht eines erfindungsgemäßen Scharbocks in einer Arbeitsstellung;
- Fig. 5: eine Ansicht gemäß Fig. 4 mit von einander getrennter Rahmen- und Scharanbindung;
- Fig. 6a: eine Explosionsansicht eines erfindungsgemäßen Scharbocks;
- Fig. 6b: eine vergrößerte Ansicht eines Details gemäß Fig. 6a;
- Fig. 7a: eine Seitenansicht eines erfindungsgemäßen Scharbocks in einer Arbeitsstellung;
- Fig. 7b: eine teilweise geschnittene Seitenansicht eines erfindungsgemäßen Scharbocks in einer gegenüber der Darstellung in Fig. 7a entriegelten Arbeitsstellung;
- Fig. 8: eine Seitenansicht eines erfindungsgemäßen Scharbocks in einer Aushubstellung;
- Fig. 9a: eine Seitenansicht mehrerer benachbarter Schareinheiten in der Arbeitsstellung, sowie
- Fig. 9b: eine Seitenansicht gemäß Fig. 9a mit einer Schareinheit in der Aushubstellung.

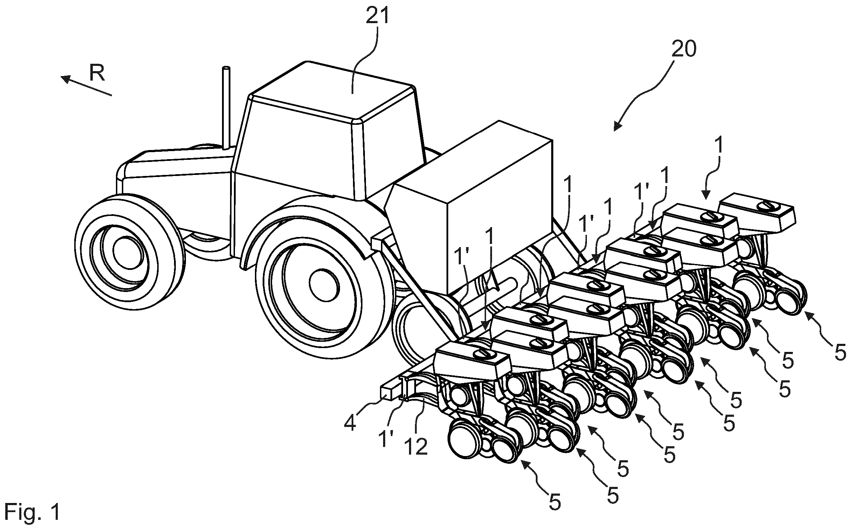

Die Darstellung in Fig. 1 zeigt eine perspektivische Draufsicht auf eine Sämaschine 20 zum Ausbringen von Saatgut G auf einer landwirtschaftlichen Nutzfläche N. Bei der Sämaschine 20 handelt es sich um eine Maschine zum Ausbringen von Saatgut G in Einzelkornsaat, es kann sich jedoch alternativ auch um eine Sämaschine 20 zur Volumensaat oder auch um eine Maschine zum Ausbringen von anderem, insbesondere körnigem Material, wie bspw. Dünger, handeln.

Die Sämaschine 20 ist an eine landwirtschaftliche Zugmaschine 21, beispielsweise einem Traktor, angebaut und wird zur Aussaat von dieser mit einer gewissen Fahrgeschwindigkeit V entlang im Wesentlichen parallel zueinander verlaufenen Bahnen in einer Fahrtrichtung über die landwirtschaftliche Nutzfläche N gezogen. Alternativ kann die Sämaschine 20 auch an die Zugmaschine 21 angehängt oder selbstfahrend ausgebildet sein.

Die Sämaschine 20 gemäß Fig. 1 weist insgesamt zehn Schareinheiten 5 auf, die quer zur Fahrtrichtung der landwirtschaftlichen Zugmaschine 21, welche der Laufrichtung R der Schareinheiten 5 entspricht, nebeneinander an dem hinteren Ende der Sämaschine 20 angeordnet sind. Je nach Ausstattung und Einsatzbereich der Sämaschine 20 können auch mehr oder weniger Schareinheiten 5 vorgesehen sein.

Die Schareinheiten 5 weisen mehrere, insbesondere meißel- oder scharartige Werkzeuge zum Aufreißen oder Lockern des Bodens auf, um diesen insbesondere für die Aussaat vor- oder nachzubereiten. Dabei umfasst eine Schareinheit 5 mindestens ein Säschar 13 zur Erzeugung einer rinnenartigen Furche in der Nutzfläche N. Ferner können bei den Schareinheiten 5 Vorrichtungen und Geräte zur Ablage des Saatguts G in der Furche sowie zum Schließen der Furche nach der Ablage des Saatguts G im Boden der Nutzfläche N vorgesehen sein.

Gemäß der Darstellung in Fig. 1 sind die Schareinheiten 5 in zwei Linien abwechselnd versetzt angeordnet. Jeweils fünf Schareinheiten 5 sind über einen vergleichsweise kurzen, plattenartigen Scharbock 1' an dem Maschinenrahmen 4 befestigt. Die anderen fünf Schareinheiten 5 sind über einen in Laufrichtung R längeren Scharbock 1 an dem Maschinenrahmen 5 befestigt. Durch die aufgrund der unterschiedlich langen Scharböcke 1, 1' abwechselnd versetzte Anordnung der Schareinheiten 5 wird die Gefahr von Stauungen von Bodenaushub und organischem Material zwischen benachbarten Schareinheiten 5 reduziert und der Durchgang von Bodenaushub und organischem Material zwischen den Schareinheiten gesteigert, wodurch die Qualität der Saatgutausbringung erhöht werden kann.

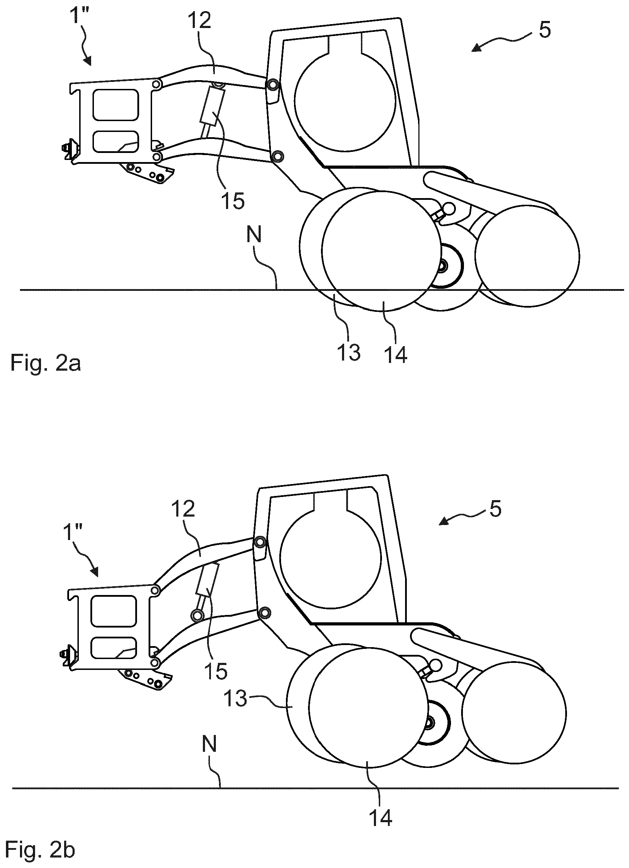

Zur Führung der Schareinheiten 5 und zum Aufbringen eines Schardrucks D ist jeweils ein Parallelogrammgestänge 12 vorgesehen. Die Darstellungen gemäß Fig. 2a und b zeigen jeweils eine Seitenansicht einer Schareinheit 5, welche über einen längeren, gegenüber den kürzeren Scharböcken 1' verlängerten Scharbock 1" des Stands der Technik an dem (in den Darstellungen gemäß Fig. 2a und b nicht gezeigten) Maschinenrahmen 4 befestigt ist. Das Parallelogrammgestänge 12 der Schareinheit 5 umfasst einen Schardruckzylinder 15, über welchen ein gewisser, einstellbarer Schardruck D auf die Schareinheit 5 aufgebracht werden kann. Über den Schardruckzylinder 15 kann der zwischen dem Säschar 13 und der Nutzfläche N wirkende Schardruck D eingestellt werden, wodurch etwa vorteilhafte Bedingungen für einen ruhigen Lauf auch bei erhöhter Fahrgeschwindigkeit V geschaffen werden können. In begrenztem Umfang kann die Schareinheit 5 über den Schardruckzylinder 15 auch zwischen einer abgesenkten Stellung (vgl. Fig. 2a) und einer gegenüber der Nutzfläche N leicht angehobenen Stellung (vgl. Fig. 2b) umgestellt werden.

Ausgehend von solchen kurzen und verlängerten Scharböcken 1', 1" des Stands der Technik werden erfindungsgemäße Scharböcke 1 vorgeschlagen, welche eine zusätzliche, über ein Stellelement 6 betätigbare Schwenkfunktionalität zum Verschwenken der Schareinheit 5 um eine Schwenkachse A₁ sowie eine Verriegelung 7 zum Verriegeln der Schareinheit 5 in deren Arbeitsstellung S₁ aufweisen. Die Verriegelung 7 ist bei solchen Scharböcken 1 auf bedienerfreundliche Art und Weise betätigbar.

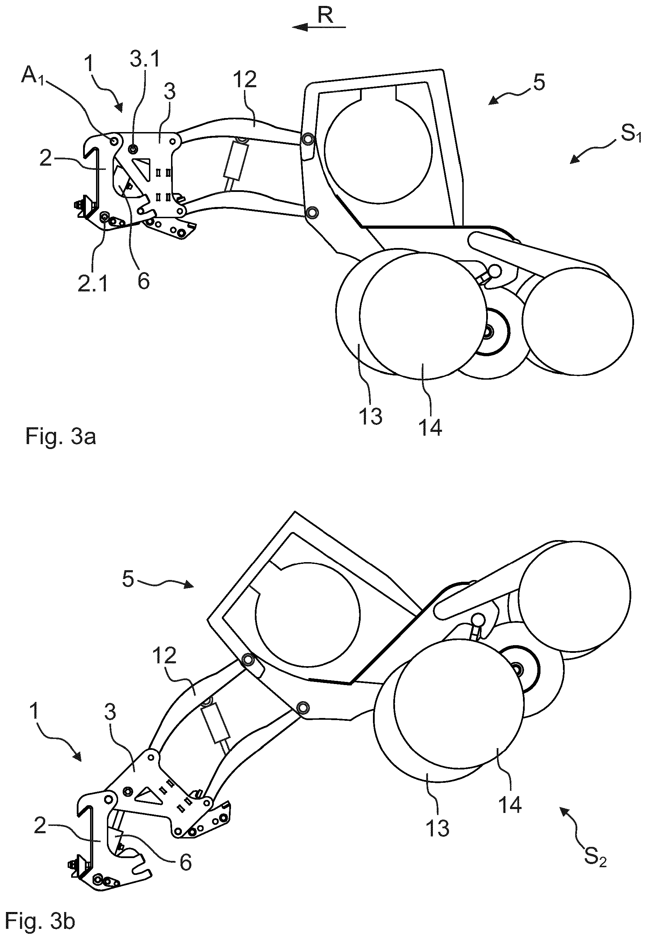

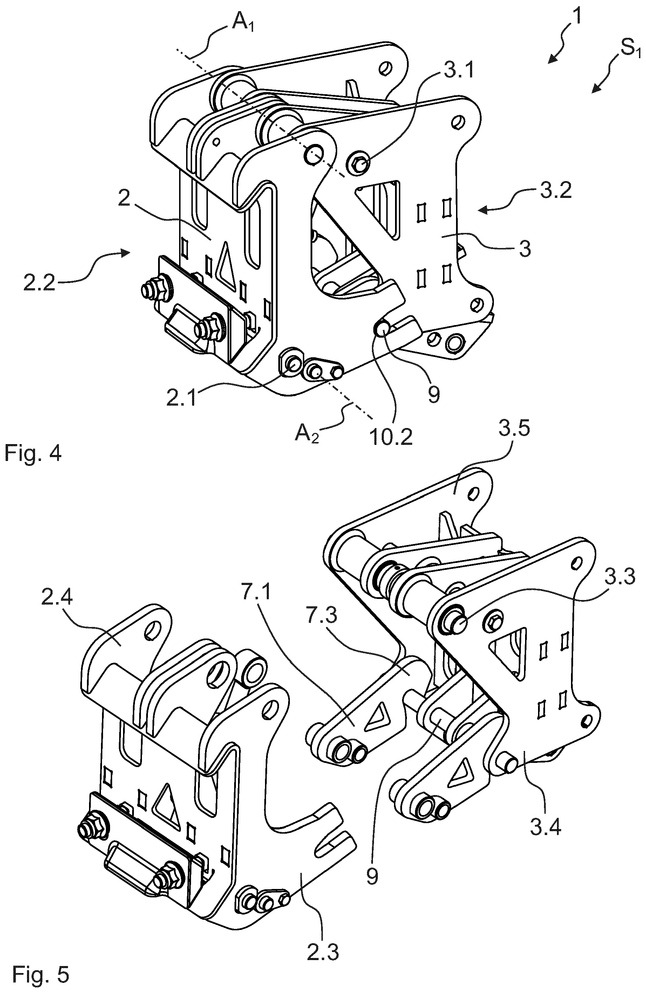

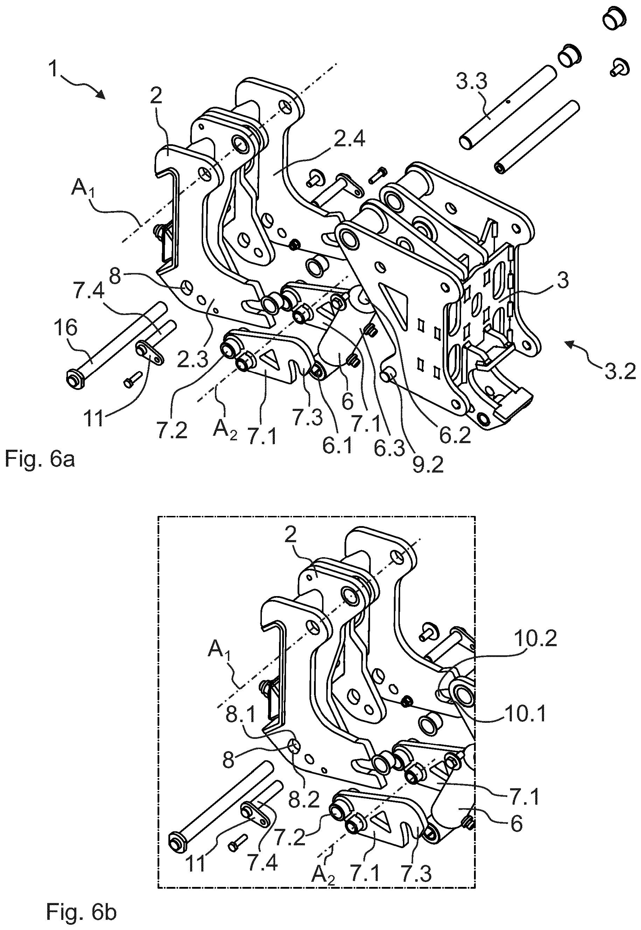

Nachfolgend wird zunächst die Schwenkfunktion des Scharbocks 1 vorwiegend anhand der Darstellung in Fig. 3a-b erläutert. Der Scharbock 1 weist eine Rahmenanbindung 2 zur Befestigung an dem Maschinenrahmen 4 sowie eine mit der Rahmenanbindung 2 wirkverbundene Scharanbindung 3 zur Befestigung einer Schareinheit 5 auf. Sowohl die Rahmenanbindung 2 als auch die Scharanbindung 3 weisen jeweils einen Montagebereich 2.2, 3.2 zur lösbaren Montage an dem Maschinenrahmen 4 und/oder der Schareinheit 5 auf. Die Rahmenanbindung 2 und auch die Scharanbindung 3 sind jeweils auf bauraum- und gewichtsparender Weise aus miteinander verbundenen Blechbauteilen gefertigt, vgl. Fig. 6a. Die Rahmenanbindung 2 weist etwa zwei gleichartige, mehrfach abgekantete äußere Schenkel 2.3, 2.4 auf, vgl. bspw. Fig. 5. In ähnlicher Weise weist auch die Scharanbindung 3 zwei blechartige, ebenfalls mehrfach abgekantete äußere Schenkel 3.4, 3.5 auf.

Die Scharanbindung 3 ist um die Schwenkachse A₁ zwischen einer die Aussaat erlaubenden, abgesenkten Arbeitsstellung S₁ (vgl. Fig. 3a) und einer angehobenen Aushubstellung S₂ (vgl. Fig. 3b) verschwenkbar. In der Aushubstellung S₂ ist die Schareinheit 5 deaktiviert, wobei insbesondere das Säschar 13, aber auch eine die Schareinheit 5 tragende Tragrolle 14 keinen Kontakt zu der Nutzfläche N haben. Zum Verschwenken der Scharanbindung 3 gegenüber der Rahmenanbindung 2 ist ein Stellelement 6 vorgesehen, welches sich zwischen einem an der Rahmenanbindung 2 ausgebildeten Drehlager 2.1 und einem an der Scharanbindung 3 ausgebildeten Drehlager 3.1 erstreckt, vgl. Fig. 3b. Die beiden Drehlager 2.1, 3.1 können insbesondere nach Art von Radial- oder Traglagern ausgebildet sein. Das Stellelement 6 ist als Hydraulikzylinder ausgebildet, dessen Zylinderrohr 6.3 mit dem rahmenanbindungsseitigen Drehlager 2.1 und dessen Kolbenstange 6.2 mit dem scharanbindungsseitigen Drehlager 3.1 verbunden ist. Alternativ kann das Stellelement 6 auch als mechanisches, beispielsweise spindelartiges Stellelement 6 oder als Stellmotor ausgebildet sein oder auch in einer anderen Ausrichtung zwischen den Drehlagern 2.1, 3.1 angeordnet sein.

Wie dies der Vergleich der Darstellungen in Fig. 3a und 3b zeigt, kann durch eine Längenänderung des Stellelements 6 die Scharanbindung 3 gegenüber der Rahmenanbindung 2 verschwenkt werden. In der kurzen Ausgangsstellung des Stellelements 6 liegt dabei die abgesenkte Arbeitsstellung S₁ und in der verlängerten Endstellung des Stellelements 6 die voll ausgehobene Aushubstellung S₂ vor. Je nach Stellung des Stellelements 6 können verschiedene Zwischenstellungen zwischen der abgesenkten Arbeitsstellung S₁ und der angehobenen Aushubstellung S₂ angefahren werden, welche sich durch einen unterschiedlichen Aushub sowie einen unterschiedlichen Schwenkwinkel unterscheiden.

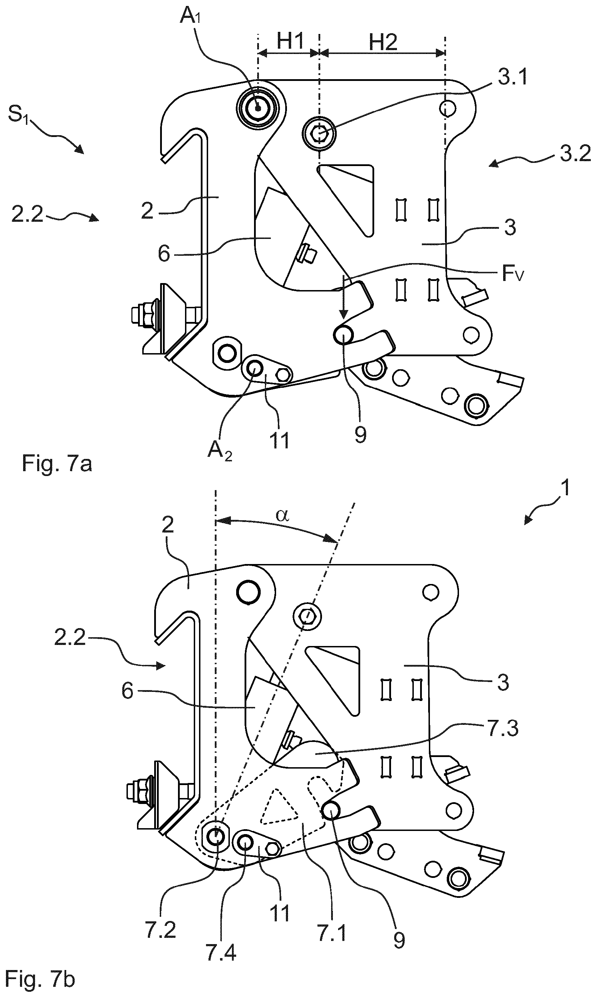

Die Schwenkachse A₁ ist an einem dem Montagebereich 3.2 gegenüberliegenden Ende der Scharanbindung 3 angeordnet, vgl. Fig. 3a. Das Drehlager 3.1 ist zwischen der Schwenkachse A₁ und dem Montagebereich 3.2 angeordnet. Der Abstand H₁ zwischen dem Drehlager 3.1 und der Schwenkachse A₁ ist dabei kleiner als der Abstand H₂ zwischen dem Drehlager 3.1 und dem Montagebereich 3.2, vgl. auch Fig. 7a. Hierdurch kann ein vorteilhaft großer ansteuerbarer Schwenkwinkelbereich erreicht werden. Mit einem vergleichsweise geringen Hub des Stellelements 6 ist die Scharanbindung 3 aufgrund dieser Anordnung um einen vergleichsweise großen Schwenkwinkel verschwenkbar.

Aus der vorstehend beschriebenen Gestaltung ergibt sich, dass sich das Stellelement 6 um einen Winkel α abgewinkelt gegenüber dem Montagebereich 2.2 der Rahmenanbindung 2 erstreckt, vgl. auch Fig. 7b. Bei vergleichsweise kleinen Winkeln α, d. h., bei einer eher steilen Anordnung des Stellelements, ergeben sich günstige Kraftverhältnisse. Insbesondere sind auf das Stellelement 6 quer zu dessen Stellrichtung wirkende Querkräfte geringer, je kleiner der Winkel α gewählt ist. Ferner braucht bei einer solchen steilen Ausrichtung die Kolbenstange 6.2 des Stellelements 6 zum Erreichen der Aushubstellung S₂ auch nicht so weit aus dem Zylinderrohr 6.3 herausgefahren werden, wie dies etwa bei einer flacheren Ausrichtung der Fall ist. Beispielsweise im Hinblick auf eine besonders fein dosierbare Einstellung des Aushubs der Schareinheit 5 kann jedoch auch alternativ eine flachere Ausrichtung vorteilhaft sein.

Im Folgenden wird anhand der Darstellungen in den Fig. 4 und 5 neben dem Aufbau des Scharbocks 1 im Hinblick auf die vorstehend erläuterte Schwenkfunktion um die Schwenkachse A₁ auch die Verriegelung 7 erläutert, über welche die Scharanbindung 3 in der Arbeitsstellung S₁ gegenüber der Rahmenanbindung 2 fixierbar ist.

Wie dies der Fig. 4 zu entnehmen ist, erstreckt sich die Schwenkachse A₁ entlang einer Schwenkwelle 3.3, welche an der Scharanbindung 3 an dessen dem Montagebereich 3.2 gegenüberliegenden Ende ausgebildet ist. Die Schwenkwelle 3.3 ist durch entsprechende Lagerbuchsen der Scharanbindung 3 sowie durch korrespondierende Bohrungen der Rahmenanbindung 2 gesteckt, vgl. insbesondere die Explosionsansicht gemäß Fig. 6a.

Die Verriegelung 7 zur Verriegelung der Scharanbindung 3 gegenüber der Rahmenanbindung 2 in der Arbeitsstellung S₁ weist einen als Doppelhebel ausgebildeten Verriegelungshebel 7.1 auf, vgl. Fig. 6a, welcher um eine Verriegelungsachse A₂ schwenkbar ist. Der als Doppelhebel ausgebildete Verriegelungshebel 7.1 weist eine Bohrung zur Aufnahme einer Verriegelungswelle 7.4 auf, entlang welcher sich die Verriegelungsachse A₂ erstreckt und die über eine Verdrehsicherung 11 verdrehsicher an der Rahmenanbindung 2 gelagert ist. Der Verriegelungshebel 7.1 ist auf der einen Seite der Verriegelungsachse A₂ über ein Hebellager 7.2 mit dem an der Rahmenanbindung 2 angeordneten Drehlager 2.1 verbunden und weist auf der anderen Seite der Verriegelungsachse A₂ ein Verriegelungselement 7.3 auf. Das Hebellager 7.2, das Verriegelungselement 7.3 und die Verriegelungsachse A₂ bilden ein Dreieck, wobei die Verriegelungsachse A₂ unterhalb einer gedachten Verbindungslinie des Hebellagers 7.2 und des Verriegelungselements 7.3 angeordnet ist. Der Verriegelungshebel 7.1 ist nach Art einer Wippe ausgestaltet, wobei das Hebellager 7.2 und das Verriegelungselement 7.3 in jeweils entgegengesetzten Richtungen um die Verriegelungsachse A₂ wippend bewegbar sind.

Das Verriegelungselement 7.3 ist hakenförmig ausgebildet und an einem an der Scharanbindung 3 angeordneten Verriegelungsbolzen 9 verriegelbar. Hierfür weist das hakenförmige Verriegelungselement 7.3 eine Ausnehmung auf, deren Durchmesser derart gewählt ist, dass das Verriegelungselement 7.3 den Verriegelungsbolzen 9 in der Arbeitsstellung S₁ im Wesentlichen spielfrei umschließen kann, vgl. Fig. 5. Hierdurch ist eine sowohl sichere und zuverlässige als auch verschleißarme Verriegelung möglich.

Im Hinblick auf eine möglichst gleichmäßige Übertragung der Verriegelungskraft Fv sind die beiden Bauteile des als Doppelhebel ausgebildeten Verriegelungshebels 7.1 derart voneinander beabstandet angeordnet, dass deren beiden Verriegelungselemente 7.3 im Bereich der beiden äußeren Enden des Verriegelungsbolzens 9 an diesem verriegelbar sind, vgl. Fig. 5. Zwischen den beiden Bauteilen des als Doppelhebel ausgebildeten Verriegelungshebels 7.1 ist das Stellelement 6 angeordnet, vgl. Fig. 6a. Alternativ ist auch eine Konstruktion mit einem einzigen Verriegelungshebel 7.1 und entsprechend nur einem Verriegelungselement 7.3 denkbar, welches beispielsweise in einem mittleren Bereich des Scharbocks 1 angeordnet sein kann. Auch eine höhere Anzahl an Verriegelungshebeln 7.1 ist denkbar.

Im Folgenden wird erläutert, auf welche Weise die Verriegelung 7 durch Betätigung des Stellelements 6 betätigbar ist. Wie bereits vorstehend erläutert, ist der Verriegelungshebel 7.1 auf der dem Verriegelungselement 7.3 gegenüberliegenden Seite über das Hebellager 7.2 mit dem an der Rahmenanbindung 2 angeordneten Drehlager 2.1 verbunden, vgl. auch Fig. 3a. Hierfür ist eine Welle 16 vorgesehen, welche sich im Wesentlichen parallel zur Schwenkachse A₁ durch die beiden äußeren Schenkel 2.3, 2.4 der Rahmenanbindung 2, die Hebellager 7.2 des als Doppelhebel ausgebildeten Verriegelungshebels 7.1 sowie einer zylinderrohrseitigen Lagerbohrung 6.1 des Stellelements 6 erstreckt. Das Drehlager 2.1, über welches auch das Stellelement 6 an der Rahmenanbindung 2 angebunden ist, ist in einer Lagerführung 8 quer zur Schwenkachse A₁ bewegbar gelagert. Die Lagerführung 8 weist eine Kontur auf und ist nach Art eines sich quer zu der Schwenkachse A₁ erstreckenden Langlochs ausgebildet, vgl. Fig. 6b. Alternativ kann die Lagerführung 8 auch als Nut oder Ausnehmung ausgebildet sein. Das Drehlager 2.1 ist in der Lagerführung 8 zwischen einem oberen Anschlag 8.1 und einem unteren Anschlag 8.2 bewegbar, wobei die entsprechenden Anschläge 8.1, 8.2 von den Wänden der kurzen Enden der als Langloch ausgebildeten Lagerführung 8 gebildet sind, vgl. Fig. 6b.

In der Arbeitsstellung S₁, in welcher die Scharanbindung 3 gegenüber der Rahmenanbindung 2 verriegelt ist, befindet sich das Stellelement 6 in dessen kurzer, eingefahrener Stellung und das Drehlager 2.1 und somit auch das Hebellager 7.2 stehen in Kontakt mit dem oberen Anschlag 8.1 der Lagerführung 8. Entsprechend der Wippenfunktionalität befindet sich das andere Ende des Verriegelungshebels 7.1 in dessen unterer Stellung, in welcher das hakenförmige Verriegelungselement 7.3 an dem Verriegelungsbolzen 9 der Scharanbindung 3 verriegelt ist, vgl. Fig. 4 und 5.

Nachfolgend wird eine Entriegelungssequenz der Verriegelung 7 sowie ein Verschwenken der Scharanbindung 3 aus der Arbeitsstellung S₁ heraus vorwiegend anhand der Darstellungen in Fig. 4-8 erläutert.

In der Arbeitsstellung S₁ befindet sich das Stellelement 6 in dessen eingefahrener Stellung. Bei Betätigung des Stellelements 6 wird die Kolbenstange 6.2 aus dem Zylinderrohr 6.3 herausgefahren und die Länge des Stellelements 6 vergrößert sich. Entsprechend der Längenänderung des Stellelements 6 wird das Drehlager 2.1 in der Lagerführung 8 bewegt, und zwar von dem oberen Anschlag 8.1 in Richtung des unteren Anschlags 8.2. Das das Drehlager 2.1 aufnehmende Hebellager 7.2 des Verriegelungshebels 7.1 folgt dieser Bewegung, wodurch der Verriegelungshebel 7.1 nach Art einer Wippe eine Schwenkbewegung um die Verriegelungsachse A₂ ausführt, vgl. Fig. 6a. Aufgrund der Schwenkbewegung wird das an dem anderen Ende des Verriegelungshebels 7.1 angeordnete hakenförmigen Verriegelungselement 7.3 ebenfalls bewegt, und zwar in eine der Bewegung des Hebellagers 7.2 entgegengesetzte Bewegungsrichtung. Gemäß der Darstellung in Fig. 5 schwenkt das Verriegelungselement 7.3 nach oben und gelangt außer Eingriff mit dem Verriegelungsbolzen 9. Die Scharanbindung 3 ist somit entriegelt. Da die Verriegelung 7 mit dem Stellelement 6 wirkverbunden ist, erweist sich eine solche Ausgestaltung auch als weniger anfällig für Störungen im Vergleich zu einer Ausgestaltung, bei welcher die Verriegelung 7 separat betätigbar ist.

Sobald das Drehlager 2.1 infolge der Ausfahrbewegung des Stellelements 6 an dem unteren Anschlag 8.2 der Lagerführung 8 anliegt, endet die Bewegung des Verriegelungshebels 7.1. Bei einer weiteren Verlängerung des Stellelements 6 durch Herausfahren der Kolbenstange 6.2 wird nunmehr das Drehlager 3.1 bewegt. Hierdurch ist die Scharanbindung 3 um die Schwenkachse A₁ verschwenkbar, gemäß der Darstellung in Fig. 3a und b im Gegenuhrzeigersinn. In der maximal ausgefahrenen Stellung der Kolbenstange 6.2 liegt die Aushubstellung S₂ der an der Scharanbindung 3 befestigten Schareinheit 5 vor.

Bei der vorliegenden Konstruktion ist eine in der Arbeitsstellung S₁ auf das scharanbindungsseitige Ende des Stellelements 6 wirkende Gewichtskraft F_{G} größer als eine auf das rahmenanbindungsseitige Ende des Stellelements 6 wirkende Hebelkraft F_{H}. Aus diesem Grund bewegt sich zunächst das rahmenanbindungsseitige Ende des Stellelements 6, wodurch die Verriegelung 7 betätigt wird. Es ergibt sich ein sequentieller Bewegungsablauf.

Nachfolgend wird ein entgegengesetztes Verschwenken der Scharanbindung 3 aus der Aushubstellung S₂ heraus sowie eine Verriegelungssequenz der Verriegelung 7 erläutert.

In der Aushubstellung S₂ befindet sich das Stellelement 6 in dessen ausgefahrener Stellung. Bei Betätigung des Stellelements 6 wird die Kolbenstange 6.2 in das Zylinderrohr 6.3 hineingefahren und die Länge des Stellelements 6 verkleinert sich. Entsprechend der Längenänderung des Stellelements 6 wird das Drehlager 3.1 bewegt und die Scharanbindung 3 führt eine Schwenkbewegung aus, welche gemäß der Darstellung in Fig. 3b im Uhrzeigersinn erfolgt. Die Schwenkbewegung endet, sobald die Scharanbindung 3 an der Rahmenanbindung 2 anliegt.

Bei einer weiteren Verkürzung des Stellelements 6 wird nun das Drehlager 2.1 in der Lagerführung 8 bewegt, und zwar von dem unteren Anschlag 8.2 in Richtung des oberen Anschlags 8.1. Das mit dem Drehlager 2.1 verbundene Hebellager 7.2 des Verriegelungshebels 7.1 folgt dieser Bewegung, wodurch der Verriegelungshebel 7.1 nach Art einer Wippe eine Schwenkbewegung um die Verriegelungsachse A₂ ausführt. Aufgrund der Schwenkbewegung wird das an dem anderen Ende des Verriegelungshebels 7.1 angeordnete hakenförmigen Verriegelungselement 7.3 ebenfalls bewegt, und zwar in eine der Bewegung des Hebellagers 7.2 entgegengesetzte Bewegungsrichtung. Demnach schwenkt das Verriegelungselement 7.3 nach unten und gelangt in Eingriff mit dem Verriegelungsbolzen 9. Die Scharanbindung 3 ist somit gegenüber der Rahmenanbindung 2 verriegelt.

In der Arbeitsstellung S₁ ist über das Stellelement 6 eine auf das Verriegelungselement 7.3 wirkende Verriegelungskraft Fv aufbringbar, vgl. Fig. 7a. Diese zwischen Verriegelungselement 7.3 und Verriegelungsbolzen 9 wirkende Verriegelungskraft Fv bewirkt eine zuverlässige Verriegelung. Ferner kann über die Verriegelungskraft Fv sichergestellt werden, dass sich die Verriegelung 7 bspw. in Folge von Rüttelbelastungen oder Vibrationen nicht unerwünscht löst. Außerdem kann über die Verriegelungskraft Fv erreicht werden, dass ein ausreichender Schardruck D auf die Schareinheiten 5 übertragbar ist.

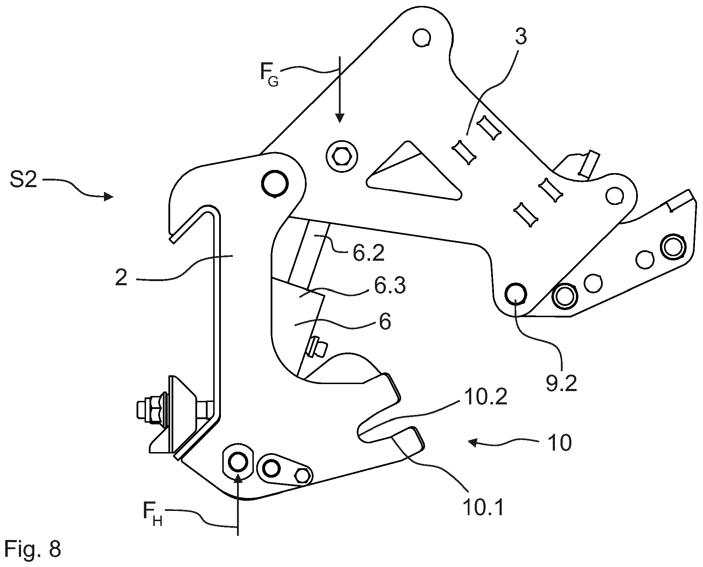

Die Rahmenanbindung 2 weist ein Stützlager 10 mit einem Anschlag 10.2 zur Abstützung eines Stützbereichs 9.2 des Verriegelungsbolzens 9 in der Arbeitsstellung S₁ auf, vgl. Fig. 8. Das Stützlager 10 ist als Doppellager an den seitlichen Schenkeln 2.3, 2.4 ausgebildet, korrespondierend zu dem Verriegelungsbolzen 9 gestaltet und dient der Aufnahme von über die Schareinheit 5 und die Scharanbindung 3 aufgebrachten Kräften. Über den Anschlag 10.2 kann sichergestellt werden, dass die Scharanbindung 3 wiederholgenau stets in der gleichen Stellung gegenüber der Rahmenanbindung 2 fixierbar ist.

Das Stützlager 10 weist auch einen trichterförmigen Führungsbereich 10.1 zur Einführung des Verriegelungsbolzens 9 auf. Wenn sich der Stützbereich 9.2 des an der Scharanbindung 3 angeordnete Verriegelungsbolzen 9 infolge eines Verschwenkens der Scharanbindung 3 dem Stützlager 10 annähert, sorgt der Führungsbereich 10.2 für eine zuverlässige Führung bis in die Arbeitsstellung S₁. Verkantungen oder Verkippungen, welche insbesondere unter der erhöhten Last der Schareinheit 5 und/oder bei Bodenunebenheiten auftreten können, können hierdurch vermieden werden. Über den Führungsbereich 10.2 und insbesondere das Stützlager 10 kann sichergestellt werden, dass sich die Scharanbindung 3 und die Rahmenanbindung 2 in der für die Verriegelung erforderlichen relativen Position zueinander befinden.

Der Verriegelungsbolzen 9 füllt eine Doppelfunktion aus. Gemeinsam mit dem hakenförmigen Verriegelungselement 7.3 sorgt dieser für die Verriegelung der Scharanbindung 3 gegenüber der Rahmenanbindung 2. Zugleich liegt der Verriegelungsbolzen 9 in der Arbeitsstellung S₁ auch an dem Anschlag 10.2 des Führungsbereichs 10 an und sorgt somit für eine korrekte Positionierung der Scharanbindung 3 gegenüber der Rahmenanbindung 2.

Im Folgenden werden anhand der Darstellungen in den Fig. 7a und b konstruktive Details des Scharbocks 1, insbesondere im Hinblick auf die Anordnung der Schwenk- und Verriegelungsachsen A₁, A₂ erläutert.

Wie dies anhand der Darstellung in Fig. 7a erkennbar ist, ist die Schwenkachse A₁ oberhalb der Verriegelungsachse A₂ angeordnet, wodurch sich günstige Kräfteverhältnisse beim Verschwenken der Scharanbindung 3 gegenüber der Rahmenanbindung 2 ergeben. Alternativ kann jedoch die Schwenkachse A₁ auch unterhalb der Verriegelungsachse A₂ angeordnet sein.

Ebenfalls in Fig. 7a ist erkennbar, dass der Abstand H₁ zwischen dem Drehlager 3.1 und der Schwenkachse A₁ kleiner ist als ein Abstand H₂ zwischen dem Drehlager 3.1 und dem Montagebereich 3.2 der Scharanbindung 3. Je näher der Angriffspunkt des Stellelements 6 an dem Drehlager 3.1 liegt, desto größer ist der möglich Aushub mit dem gleichen Stellelement 6. Der Winkel α zwischen dem Stellelement 6 und dem Montagebereich 2.2 der Rahmenanbindung ist vergleichsweise klein und beträgt weniger als 45 Grad, vorzugsweise weniger als 30 Grad. Es ergeben sich günstige Hebelverhältnisse und vorteilhaft geringe Querkräfte, welche auf das Stellelement 6 wirken. Alternativ sind jedoch auch andere Abstands- und Winkelverhältnisse denkbar.

Der Montagebereich 2.2 der Rahmenanbindung 2 und der Montagebereich 3.2 der Scharanbindung 3 sind in der Arbeitsstellung S1 im Wesentlichen parallel und vertikal zueinander ausgerichtet, vgl. Fig. 7a. Ferner ist der Montagebereich 2.2 der Rahmenanbindung 2 komplementär zu einem Montagebereich des Maschinenrahmens 4 ausgebildet und der Montagebereich 3.2 der Scharanbindung 3 ist komplementär zu einem Montagebereich der Schareinheit 5 ausgebildet. Hierdurch ergibt sich eine erhöhte Flexibilität, da bei einer Sämaschine 20 die jeweiligen Schareinheiten 5 entweder direkt oder über plattenartige, kurze Scharböcke an dem Maschinenrahmen 4 befestigbar sind, oder aber über verlängerte, schwenkbare Scharböcke 1. Hierdurch ist die Sämaschine 20 flexibel konfigurierbar. Insbesondere sind die Schareinheiten 5 abwechselnd über kurze und lange Scharböcke 1 an dem Maschinenrahmen 6 befestigbar, vgl. Fig. 1. Bei einer solchen Konfiguration mit einer Anordnung der Schareinheiten 5 in zwei Linien ergibt sich eine vorteilhaft geringe Beeinflussung benachbarter Schareinheiten 5. Insbesondere kann bei einer solchen Konfiguration ein axialer Versatz zwischen den beiden Linien von etwa 200 mm vorliegen.

Die versetzt angeordneten Schareinheiten 5 bewirken unterschiedliche Aufstandskräfte an gleichen Messpunkten, weshalb über eine vergleichende Aufstandskraftmessung, bspw. an dem jeweiligen Scharbock 1 oder an dem Maschinenrahmen 4, Rückschluss auf die Ausrichtung der jeweiligen Schareinheiten 5 gezogen werden kann. Da die Ausrichtung der Schareinheiten 5 ein wichtiger Einflussfaktor für eine gleichmäßige Saatgutablage und damit eine gut Aussaatqualität ist, bietet die Erfassung der Ausrichtung der Schareinheiten 5 über die Aufstandskraftmessung eine Kontrollmöglichkeit der Aussaatqualität. Die Erfassung der Aufstandskraft zur Detektion der Ausrichtung der Schareinheiten 5 kann etwa in eine Regelstrecke zum hydraulischen Ausgleich von Abweichungen der Ausrichtung integriert sein.

Ferner erlaubt die komplementäre Ausgestaltung der Montagebereiche 2.2, 3.2 eine einfache, benutzerfreundliche Nachrüstbarkeit der Scharböcke 1 an bestehende Sämaschinen 20. Eine aufwändige Veränderung an den Maschinenrahmen 4 der Sämaschinen 20 ist nicht erforderlich.

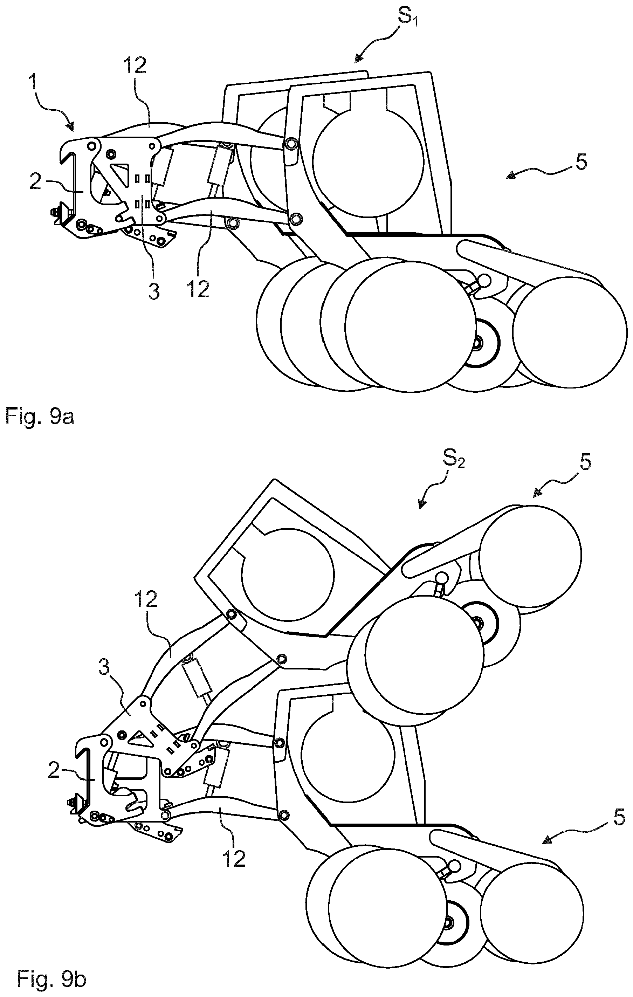

Darüber hinaus ergibt sich bei einer solchen Anordnung die Möglichkeit, die Hälfte der Schareinheiten 5, welche über die verlängerten, schwenkbaren Scharböcke 1 mit dem Maschinenrahmen 6 verbunden sind, in die Aushubstellung S₂ zu verschwenken und somit zu deaktivieren, vgl. Fig. 9b. Im Vergleich zu der Konfiguration gemäß Fig. 9a sind somit die Hälfte der Schareinheiten 5 außer Betrieb. Die Aussaat erfolgt mit einem doppelten Abstand zwischen den Furchen bzw. den Saatreihen, was sich bei speziellem Saatgut G als vorteilhaft erweisen kann.

Der vorstehend beschriebene Scharbock 1 und die Sämaschine 20 zeichnen sich dadurch aus, dass die Verriegelung 7 mit dem Stellelement 6 wirkverbunden und durch Betätigung des Stellelements 6 betätigbar ist. Hierdurch kann eine bedienerfreundliche und zeitsparende Betätigung der Verriegelung 7 über das Stellelement 6 ermöglicht werden.

### Bezugszeichen:

- 1: Scharbock
- 1: Scharbock
- 1": Scharbock
- 2: Rahmenanbindung
- 2.1: Drehlager
- 2.2: Montagebereich
- 2.3: Schenkel
- 2.4: Schenkel
- 3: Scharanbindung
- 3.1: Drehlager
- 3.2: Montagebereich
- 3.3: Schwenkwelle
- 3.4: Schenkel
- 3.5: Schenkel
- 4: Maschinenrahmen
- 5: Schareinheit
- 6: Stellelement
- 6.1: Lagerbohrung
- 6.2: Kolbenstange
- 6.3: Zylinderrohr
- 7: Verriegelung
- 7.1: Verriegelungshebel
- 7.2: Hebellager
- 7.3: Verriegelungselement
- 7.4: Verriegelungswelle
- 8: Lagerführung
- 8.1: Anschlag
- 8.2: Anschlag
- 9: Verriegelungsbolzen
- 9.1: Verriegelungsbereich
- 9.2: Stützbereich
- 10: Stützlager
- 10.1: Führungsbereich
- 10.2: Anschlag
- 11: Verdrehsicherung
- 12: Parallelogrammgestänge
- 13: Säschar
- 14: Tragrolle
- 15: Schardruckzylinder
- 16: Welle
- 20: Sämaschine
- 21: Zugmaschine

- A₁: Schwenkachse
- A₂: Verriegelungsachse
- D: Schardruck
- F_{G}: Gewichtskraft
- F_{H}: Hebelkraft
- Fv: Verriegelungskraft
- G: Saatgut
- H₁: Abstand
- H₂: Abstand
- N: Nutzfläche
- R: Laufrichtung
- S₁: Arbeitsstellung
- S₂: Aushubstellung
- V: Fahrgeschwindigkeit

- α: Winkel

## Patentansprüche

1. Scharbock mit einer Rahmenanbindung (2) zur Befestigung an einem Maschinenrahmen (4) und einer Scharanbindung (3) zur Befestigung einer Schareinheit (5), wobei die Scharanbindung (3) über ein Stellelement (6) zwischen einer Arbeitsstellung (S₁) und einer Aushubstellung (S₂) relativ zu der Rahmenanbindung (2) um eine Schwenkachse (A₁) verschwenkbar und über eine Verriegelung (7) zur Fixierung der Schareinheit (5) in der Arbeitsstellung (S₁) gegenüber der Rahmenanbindung (2) verriegelbar ist,
**dadurch gekennzeichnet,**
**dass** die Verriegelung (7) mit dem Stellelement (6) wirkverbunden und durch Betätigung des Stellelements (6) betätigbar ist.

2. Scharbock nach Anspruch 1, **dadurch gekennzeichnet, dass** sich das Stellelement (6) zwischen einem an der Rahmenanbindung (2) ausgebildeten Drehlager (2.1) und einem an der Scharanbindung (3) ausgebildeten Drehlager (3.1) erstreckt.

3. Scharbock nach Anspruch 2, **dadurch gekennzeichnet, dass** das an der Rahmenanbindung (2) angeordnete Drehlager (2.1) in einer Lagerführung (8) bewegbar, insbesondere quer zur Schwenkachse (A₁) bewegbar, insbesondere zwischen einem oberen Anschlag (8.1) und einem unteren Anschlag (8.2) der Lagerführung (8) bewegbar, gelagert ist.

4. Scharbock nach einem der vorhergehenden Ansprüche, **dadurch gekennzeichnet, dass** die Verriegelung (7) mindestens einen um eine Verriegelungsachse (A₂) verschwenkbaren Verriegelungshebel (7.1) aufweist.

5. Scharbock nach Anspruch 4, **dadurch gekennzeichnet, dass** der Verriegelungshebel (7.1) auf der einen Seite der Verriegelungsachse (A₂) über ein Hebellager (7.2) mit dem an der Rahmenanbindung (2) angeordneten Drehlager (2.1) verbunden ist und auf der anderen Seite der Verriegelungsachse (A₂) ein Verriegelungselement (7.3) aufweist.

6. Scharbock nach einem der Ansprüche 4 oder 5, **dadurch gekennzeichnet, dass** über das Stellelement (6) eine auf das Verriegelungselement (7.3) wirkende Verriegelungskraft (Fv) aufbringbar ist.

7. Scharbock nach einem der Ansprüche 4 bis 6, **dadurch gekennzeichnet, dass** das Verriegelungselement (7.3) hakenförmig ausgebildet ist und an einem an der Scharanbindung (3) angeordneten Verriegelungsbolzen (9) verriegelbar ist.

8. Scharbock nach Anspruch 7, **dadurch gekennzeichnet, dass** sich der Verriegelungsbolzen (9) in der Arbeitsstellung (S₁) zur Aufnahme von über die Schareinheit (5) aufgebrachten Kräften an einem an der Rahmenanbindung (2) ausgebildeten Anschlag (10.2) eines Stützlagers (10) abstützt.

9. Scharbock nach einem der vorhergehenden Ansprüche, **dadurch gekennzeichnet, dass** die Rahmenanbindung (2) und die Scharanbindung (3) jeweils einen Montagebereich (2.2, 3.2) zur lösbaren Montage an dem Maschinenrahmen (4) und/oder der Schareinheit (5) aufweisen.

10. Scharbock nach Anspruch 9, **dadurch gekennzeichnet, dass** die Schwenkachse (A₁) an einem dem Montagebereich (3.2) gegenüberliegenden Ende der Scharanbindung (3) angeordnet ist und das Drehlager (3.1) zwischen der Schwenkachse (A₁) und dem Montagebereich (3.2) angeordnet ist.

11. Scharbock nach einem der Ansprüche 9 oder 10, **dadurch gekennzeichnet, dass** der Montagebereich (2.2) der Rahmenanbindung (2) komplementär zu einem Montagebereich des Maschinenrahmens (4) und der Montagebereich (3.2) der Scharanbindung (3) komplementär zu einem Montagebereich der Schareinheit (5) ausgebildet sind.

12. Scharbock nach einem der vorhergehenden Ansprüche, **dadurch gekennzeichnet, dass** eine in der Arbeitsstellung (S₁) auf das scharanbindungsseitige Ende des Stellelements (6) wirkende Gewichtskraft (F_{G}) größer ist als eine auf das rahmenanbindungsseitige Ende des Stellelements (6) wirkende Hebelkraft (F_{H}).

13. Sämaschine mit einem Maschinenrahmen (4) und mehreren, quer zu einer Laufrichtung (R) parallel zueinander angeordneten Schareinheiten (5), wobei mindestens eine der Schareinheiten (5) über einen Scharbock (1) an dem Maschinenrahmen (4) befestigt ist,
**dadurch gekennzeichnet,**
**dass** der Scharbock (1) nach einem der vorhergehenden Ansprüche ausgebildet ist.

14. Sämaschine nach Anspruch 13, **gekennzeichnet durch** mehrere quer zur Laufrichtung (R) parallel zueinander angeordnete Schareinheiten (5), welche abwechselnd direkt an dem Maschinenrahmen (4) oder indirekt über einen Scharbock (1) an dem Maschinenrahmen (4) befestigt sind.

## Claims

1. Coulter bracket comprising a frame connection (2) for attachment to a machine frame (4) and a coulter connection (3) for attachment of a coulter unit (5), the coulter connection (3) being pivotable about a pivot axis (A₁) via an actuating element (6) between a working position (S₁) and a raised position (S₂) relative to the frame connection (2) and being lockable via a locking mechanism (7) to fix the coulter unit (5) in the working position (S₁) relative to the frame connection (2),
**characterized**
**in that** the locking mechanism (7) is operatively connected to the actuating element (6) and can be actuated by actuating the actuating element (6).

2. Coulter bracket according to claim 1, **characterized in that** the actuating element (6) extends between a rotary bearing (2.1) formed at the frame connection (2) and a rotary bearing (3.1) formed at the coulter connection (3).

3. Coulter bracket according to claim 2, **characterized in that** the rotary bearing (2.1) arranged at the frame connection (2) is movable in a bearing guide (8), in particular movable transversely to the pivot axis (A₁), in particular movable between an upper stop (8.1) and a lower stop (8.2) of the bearing guide (8).

4. Coulter bracket according to any of the preceding claims,
**characterized in that** the locking mechanism (7) has at least one locking lever (7.1) pivotable about a locking axis (A₂).

5. Coulter bracket according to claim 4, **characterized in that** the locking lever (7.1) on one side of the locking axis (A₂) is connected via a lever bearing (7.2) to the rotary bearing (2.1) arranged at the frame connection (2) and has a locking element (7.3) on the other side of the locking axis (A₂).

6. Coulter bracket according to one of claims 4 or 5, **characterized in that** a locking force (Fv) acting on the locking element (7.3) can be applied via the actuating element (6).

7. Coulter bracket according to any of claims 4 to 6, **characterized in that** the locking element (7.3) is hook shaped and can be locked to a locking bolt (9) arranged on the coulter connection (3).

8. Coulter bracket according to claim 7, **characterized in that,** in the working position (S₁), the locking bolt (9) is supported by a stop (10.2) of a support bearing (10), said stop being formed at the frame connection (2), to absorb forces applied via the coulter unit (5).

9. Coulter bracket according to any of the preceding claims,
**characterized in that** the frame connection (2) and the coulter connection (3) each have a mounting region (2.2, 3.2) for detachable mounting on the machine frame (4) and/or the coulter unit (5).

10. Coulter bracket according to claim 9, **characterized in that** the pivot axis (A₁) is arranged at an end of the coulter connection (3) opposite the mounting region (3.2) and the rotary bearing (3.1) is arranged between the pivot axis (A₁) and the mounting region (3.2).

11. Coulter bracket according to one of claims 9 or 10, **characterized in that** the mounting region (2.2) of the frame connection (2) is designed to be complementary to a mounting region of the machine frame (4) and the mounting region (3.2) of the coulter connection (3) is designed to be complementary to a mounting region of the coulter unit (5).

12. Coulter bracket according to any of the preceding claims,
**characterized in that** a weight force (F_{G}) acting on the coulter-connection-side end of the actuating element (6) in the working position (S₁) is greater than a lever force (F_{H}) acting on the frame-connection-side end of the actuating element (6).

13. Seed drill comprising a machine frame (4) and a plurality of coulter units (5) arranged parallel to each other transversely to a direction of travel (R), at least one of the coulter units (5) being attached to the machine frame (4) via a coulter bracket (1),
**characterized**
**in that** the coulter bracket (1) is designed according to any of the preceding claims.

14. Seed drill according to claim 13, **characterized by** a plurality of coulter units (5) arranged parallel to each other transversely to the direction of travel (R), which are alternately attached directly to the machine frame (4) or indirectly to the machine frame (4) via a coulter bracket (1).

## Revendications

1. Support de soc comportant une attache au cadre (2) pour la fixation sur un cadre de machine (4) et une attache au soc (3) pour la fixation d'une unité formant soc (5), dans lequel l'attache au soc (3) peut pivoter autour d'un axe de pivotement (A₁) par rapport à l'attache au cadre (2) par l'intermédiaire d'un élément de réglage (6) entre une position de travail (S₁) et une position de relevage (S₂) et peut être verrouillée par rapport à l'attache au cadre (2) par l'intermédiaire d'un dispositif de verrouillage (7) pour le fixage de l'unité formant soc (5) dans la position de travail (S₁),
**caractérisé en ce**
**que** le dispositif de verrouillage (7) est relié fonctionnellement à l'élément de réglage (6) et peut être actionné par un actionnement de l'élément de réglage (6).

2. Support de soc selon la revendication 1, **caractérisé en ce que** l'élément de réglage (6) s'étend entre un palier de rotation (2.1) réalisé sur l'attache au cadre (2) et un palier de rotation (3.1) réalisé sur l'attache au soc (3).

3. Support de soc selon la revendication 2, **caractérisé en ce que** le palier de rotation (2.1) disposé sur l'attache au cadre (2) est monté mobile dans un guide de palier (8), en particulier mobile transversalement à l'axe de pivotement (A₁), en particulier mobile entre une butée supérieure (8.1) et une butée inférieure (8.2) du guide de palier (8).

4. Support de soc selon l'une des revendications précédentes,
**caractérisé en ce que** le dispositif de verrouillage (7) présente au moins un levier de verrouillage (7.1) pouvant pivoter autour d'un axe de verrouillage (A₂).

5. Support de soc selon la revendication 4, **caractérisé en ce que** le levier de verrouillage (7.1) est relié, d'un côté de l'axe de verrouillage (A₂), par l'intermédiaire d'un palier de levier (7.2), au palier de rotation (2.1) disposé sur l'attache au cadre (2) et présente, de l'autre côté de l'axe de verrouillage (A₂), un élément de verrouillage (7.3).

6. Support de soc selon l'une des revendications 4 ou 5,
**caractérisé en ce qu'**une force de verrouillage (Fv) agissant sur l'élément de verrouillage (7.3) peut être appliquée par l'intermédiaire de l'élément de réglage (6).

7. Support de soc selon l'une des revendications 4 à 6, **caractérisé en ce que** l'élément de verrouillage (7.3) est réalisé en forme de crochet et peut être verrouillé sur un boulon de verrouillage (9) disposé sur l'attache au soc (3).

8. Support de soc selon la revendication 7, **caractérisé en ce que** le boulon de verrouillage (9) s'appuie, dans la position de travail (S₁) pour permettre d'absorber des forces appliquées par l'intermédiaire de l'unité formant soc (5), sur une butée (10.2) d'un palier d'appui (10) réalisée sur l'attache au cadre (2).

9. Support de soc selon l'une des revendications précédentes,
**caractérisé en ce que** l'attache au cadre (2) et l'attache au soc (3) présentent respectivement une zone de montage (2.2, 3.2) pour le montage amovible sur le cadre de machine (4) et/ou sur l'unité formant soc (5).

10. Support de soc selon la revendication 9, **caractérisé en ce que** l'axe de pivotement (A₁) est disposé à une extrémité de l'attache au soc (3) opposée à la zone de montage (3.2) et le palier de rotation (3.1) est disposé entre l'axe de pivotement (A₁) et la zone de montage (3.2).

11. Support de soc selon l'une des revendications 9 ou 10,
**caractérisé en ce que** la zone de montage (2.2) de l'attache au cadre (2) est complémentaire à une zone de montage du cadre de machine (4) et la zone de montage (3.2) de l'attache au soc (3) est complémentaire à une zone de montage de l'unité formant soc (5).

12. Support de soc selon l'une des revendications précédentes,
**caractérisé en ce qu'**une force de poids (F_{G}) agissant sur l'extrémité côté attache au soc de l'élément de réglage (6) dans la position de travail (S₁) est supérieure à une force de levier (F_{H}) agissant sur l'extrémité côté attache au cadre de l'élément de réglage (6).

13. Semoir comportant un cadre de machine (4) et plusieurs unités formant socs (5) disposées parallèlement les unes aux autres transversalement à une direction de déplacement (R), dans lequel au moins l'une des unités formant socs (5) est fixée au cadre de machine (4) par l'intermédiaire d'un support de soc (1),
**caractérisé en ce**
**que** le support de soc (1) est réalisé selon l'une des revendications précédentes.

14. Semoir selon la revendication 13, **caractérisé par** plusieurs unités formant socs (5) disposées parallèlement les unes aux autres transversalement à la direction de déplacement (R), lesquelles sont fixées en alternance directement au cadre de machine (4) ou indirectement au cadre de machine (4) par l'intermédiaire d'un support de soc (1).
